# EUROPEAN PATENT APPLICATION

(11) **EP 4 560 349 A1**
(43) Date of publication of application: **28.05.2025**
(21) Application number: 23842735.5
(22) Date of filing: 20.06.2023
(51) Int. Cl.: G01S 7/285, G01S 7/28

(54) **AUTOMATIC TUNING DEVICE, MAGNETRON RADAR, AUTOMATIC TUNING METHOD, AND AUTOMATIC TUNING PROGRAM**

(30) Priority: 20.07.2022 JP 2022115390
(71) Applicant: Furuno Electric Co., Ltd., Nishinomiya-City, Hyogo 662-8580 (JP)
(72) Inventor: FUJIMURA, Takuya, Nishinomiya-City, Hyogo 6628580 (JP); SHIROMOTO, Masayuki, Nishinomiya-City, Hyogo 6628580 (JP)
(74) Representative: Müller Hoffmann & Partner
(86) International application number: PCT/JP2023/022829
(87) International publication number: WO 2024/018804

(57) **Abstract**

[Problem] To more suitably control the frequency of a carrier signal given to a mixer in a tuning process.

[Solution] An automatic tuning device comprises: an output unit that outputs a tuning control voltage for adjusting the frequency of a carrier signal to be given to a mixer; an acquisition unit that acquires a tuning instruction voltage which indicates the intensity of a component of a prescribed frequency in an output signal of the mixer; a setting unit that sets a reference value on the basis of a prescribed range, which includes a first level that is a tuning control voltage corresponding to the maximum tuning instruction voltage, in a first period; a calculation unit that calculates an index value on the basis of the result of scanning of a first range including the first level, in a second period; and a determination unit that determines the output level of a tuning control voltage which is output by the output unit, on the basis of the result of comparing the index value and the reference value.

## Description

### Technical Field

The present invention relates to an automatic tuning device, a magnetron radar, an automatic tuning method, and an automatic tuning program.

### Related Art

Conventionally, in magnetron radars, a tuning process is performed to control the frequency of a carrier signal provided to a mixer, so that the output signal of the mixer, which down-converts a reception wave, is at a particular frequency.

For example, Patent Document 1 (Japanese Patent Application Laid-Open No. 2008-209154) discloses a radar receiver as follows. Specifically, the radar receiver amplifies a reflected radar wave that is received, mixes the amplified wave with a local frequency signal output from a local oscillator to generate an intermediate frequency signal, and performs a particular reception process based on the intermediate frequency signal. In the radar receiver, the local oscillator is disposed in the same temperature environment as a microwave oscillator of a radar transmitter and has substantially the same temperature-oscillation frequency property as the microwave oscillator.

### [Prior Art Document(s)]

### [Patent Document(s)]

[Patent Document 1] Japanese Patent Application Laid-Open No. 2008-209154

### SUMMARY OF INVENTION

### Technical Problem

Beyond the technology described in Patent Document 1, a technology that enables more suitable control of the frequency of a carrier signal provided to a mixer in a tuning process is desired.

The present invention is made to solve the above-mentioned issue, and an objective thereof is to provide an automatic tuning device, a magnetron radar, an automatic tuning method, and an automatic tuning program that can more suitably control the frequency of a carrier signal provided to a mixer in a tuning process.

### Solution to Problem

(1) In order to solve the issue, an automatic tuning device according to an aspect of the present invention is an automatic tuning device mounted on a magnetron radar including a mixer that down-converts a reception wave. The automatic tuning device includes: an output unit, configured to output a tuning control voltage for adjusting a frequency of a carrier signal provided to the mixer; an acquisition unit, configured to acquire a tuning indication voltage indicating an intensity of a component of a particular frequency in an output signal of the mixer; a setting unit, configured to set a reference value based on a particular range including therein a first level that is the tuning control voltage corresponding to a maximum of the tuning indication voltage in a first period; a calculation unit, configured to calculate an index value based on a scanning result of a first range including therein the first level in a second period; and a determination unit, configured to determine the tuning control voltage output by the output unit based on a comparison result between the index value and the reference value.
   In this way, with the configuration of determining the output level of the tuning control voltage based on the comparison result between the index value and the reference value, it is possible to determine the tuning control voltage output by the output unit by considering the comparison result between the index value based on the scanning result of the first range in the second period and the reference value based on the tuning indication voltage in the first period. Therefore, in the case where the tuning point during the second period transitions from the tuning point during the first period due to the temperature dependence of the magnetron, it is possible to recognize the transition of the tuning point based on the comparison result between the index value and the reference value and determine a more suitable tuning control voltage level for tuning by considering the transition of the tuning point. As a result, it is possible to more suitably control the frequency of the carrier signal provided to the mixer in the tuning process.
(2) According to (1), the automatic tuning device may further include a detection unit configured to detect the first level based on a scanning result of a second range wider than the first range in the first period.
   With such configuration, compared to the time required for the process of detecting the first level in the first period, it is possible to perform the calculation of the index value and the determination of the tuning control voltage level in a shorter time in the second period.
(3) According to (2), the setting unit may be configured to set the reference value based on the tuning indication voltage in the particular range, and the calculation unit may be configured to calculate the index value based on the tuning indication voltage of the first range.
   With such configuration, it is possible to calculate the reference value and the index value based on the tuning indication voltage of each range.
(4) According to (1), the calculation unit may be configured to calculate multiple index values by scanning with a width same as the particular range, and the determination unit may be configured to determine the tuning control voltage in correspondence with a scanning position at which the index value equal to or more than the reference value is calculated.
   With such configuration, it is possible to determine the output level based on the scanning result of the level of the tuning control voltage in the scanning range according to the magnitude relationship between the index value and the reference value. Therefore, in a suitable scanning range corresponding to the degree of transition from the tuning point in the first period, it is possible to more reliably detect the tuning point in the second period and determine as the output level the detected tuning point.
(5) According to any one of (1) to (4), the setting unit may be configured to set the reference value based on an accumulated value of the tuning indication voltage of the particular range, and the calculation unit may be configured to calculate the index value based on the accumulated value of the tuning indication voltage.
   With such configuration, by using the reference value based on the accumulated value and the index value based on the accumulated value, it is possible to more accurately recognize the transition of the tuning point in the second period from the tuning point in the first period.
(6) According to (5), the setting unit may be configured to set, as the reference value, a value obtained by multiplying the accumulated value by a particular value less than 1.
   With such configuration, it is possible to flexibly set a threshold related to the degree of transition of the tuning point in the second period from the tuning point in the first period in accordance with the particular value by which the accumulated value is multiplied.
(7) According to (1), the particular range may be a half-width of a peak of a maximum of the tuning indication voltage, and the calculation unit may be configured to calculate, as the index value, a half-width of a peak present in the first range.
   With such configuration, it is possible to calculate the index value with a simple process.
(8) In order to solve the issue, a magnetron radar according to an aspect of the present invention includes the automatic tuning device according to any one of (1) to (7).
   With such configuration, it is possible to realize a magnetron radar in which a more accurate tuning process is performed.
(9) In order to solve the issue, an automatic tuning method according to an aspect of the present invention is an automatic tuning method for a magnetron radar including a mixer that down-converts a reception wave. The automatic tuning method includes: outputting a tuning control voltage for adjusting a frequency of a carrier signal provided to the mixer; generating a tuning indication voltage indicating an intensity of a component of a particular frequency in an output signal of the mixer; setting a reference value based on a particular range including therein a first level that is the tuning control voltage corresponding to a maximum of the tuning indication voltage in a first period; calculating an index value based on a scanning result of a first range including therein the first level in a second period; and determining the tuning control voltage output based on a comparison result between the index value and the reference value.
   In this way, with the method of determining the output level of the tuning control voltage based on the comparison result between the index value and the reference value, it is possible to determine the tuning control voltage output by the output unit by considering the comparison result between the index value based on the scanning result of the first range in the second period and the reference value based on the tuning indication voltage in the first period. Therefore, in the case where the tuning point during the second period transitions from the tuning point during the first period due to the temperature dependence of the magnetron, it is possible to recognize the transition of the tuning point based on the comparison result between the index value and the reference value and determine a more suitable tuning control voltage level for tuning by considering the transition of the tuning point. As a result, it is possible to more suitably control the frequency of the carrier signal provided to the mixer in the tuning process.
(9) In order to solve the issue, an automatic tuning program according to an aspect of the present invention is an automatic tuning program for a magnetron radar including a mixer that down-converts a reception wave. The automatic tuning program causes a computer to execute: a process of outputting a tuning control voltage for adjusting a frequency of a carrier signal provided to the mixer; a process of generating a tuning indication voltage indicating an intensity of a component of a particular frequency in an output signal of the mixer; a process of setting a reference value based on a particular range including therein a first level that is the tuning control voltage corresponding to a maximum of the tuning indication voltage in a first period; a process of calculating an index value based on a scanning result of a first range including therein the first level in a second period; and a process of determining the tuning control voltage output based on a comparison result between the index value and the reference value.

In this way, with the method of determining the output level of the tuning control voltage based on the comparison result between the index value and the reference value, it is possible to determine the tuning control voltage output by the output unit by considering the comparison result between the index value based on the scanning result of the first range in the second period and the reference value based on the tuning indication voltage in the first period. Therefore, in the case where the tuning point during the second period transitions from the tuning point during the first period due to the temperature dependence of the magnetron, it is possible to recognize the transition of the tuning point based on the comparison result between the index value and the reference value and determine a more suitable tuning control voltage level for tuning by considering the transition of the tuning point. As a result, it is possible to more suitably control the frequency of the carrier signal provided to the mixer in the tuning process.

### [Inventive Effects]

According to the present invention, in the tuning process, it is possible to more suitably control the frequency of the carrier signal provided to the mixer.

### BRIEF DESCRIPTION OF DRAWINGS

[FIG. 1] FIG. 1 is a diagram illustrating a configuration of a magnetron radar according to an embodiment of the present invention.
[FIG. 2] FIG. 2 is a diagram illustrating a configuration of a generation unit in the magnetron radar according to an embodiment of the present invention.
[FIG. 3] FIG. 3 is a diagram illustrating an example of tuning property data generated by an automatic tuning device according to an embodiment of the present invention.
[FIG. 4] FIG. 4 is a diagram illustrating an example of tuning property data generated by the automatic tuning device according to an embodiment of the present invention.
[FIG. 5] FIG. 5 is a diagram illustrating an example of tuning property data generated by the automatic tuning device according to an embodiment of the present invention.
[FIG. 6] FIG. 6 is a diagram illustrating a configuration of the automatic tuning device according to an embodiment of the present invention.
[FIG. 7] FIG. 7 is a diagram illustrating an example of tuning property data generated by the automatic tuning device according to an embodiment of the present invention.
[FIG. 8] FIG. 8 is a diagram illustrating an example of tuning property data generated by the automatic tuning device according to an embodiment of the present invention.
[FIG. 9] FIG. 9 is a diagram illustrating another example of the tuning property data generated by the automatic tuning unit according to an embodiment of the present invention.
[FIG. 10] FIG. 10 is a flowchart illustrating an example of an operation of the magnetron radar according to an embodiment of the present invention when performing initial tuning setting.
[FIG. 11] FIG. 11 is a flowchart illustrating an example of an operation of the magnetron radar according to an embodiment of the present invention when performing cumulative search.
[FIG. 12] FIG. 12 is a flowchart illustrating another example of the operation of the magnetron radar according to an embodiment of the present invention when performing a cumulative search.
[FIG. 13] FIG. 13 is a diagram illustrating an example of a method for calculating a threshold by an automatic tuning device according to a modified example of an embodiment of the present invention.
[FIG. 14] FIG. 14 is a diagram illustrating an example of a method for calculating an index value by an automatic tuning device according to a modified example of an embodiment of the present invention.
[FIG. 15] FIG. 15 is a diagram illustrating another example of the method for calculating the index value by the automatic tuning device according to a modified example of an embodiment of the present invention.

### DESCRIPTION OF EMBODIMENTS

The following describes embodiments of the present invention using the drawings. In the drawings, the same or equivalent parts are given the same reference numerals, and their descriptions are not repeated. Additionally, at least some of the embodiments described below may be combined arbitrarily.

### [Configuration and basic operation]

### <Magnetron radar>

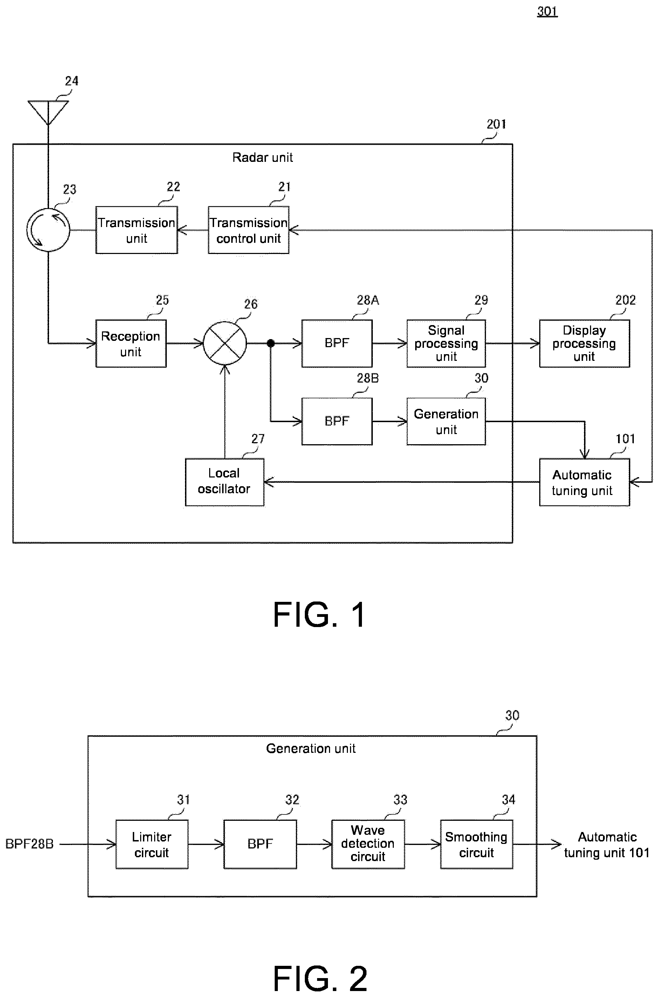

FIG. 1 is a diagram illustrating a configuration of a magnetron radar according to an embodiment of the present invention. Referring to FIG. 1, a magnetron radar 301 includes an automatic tuning unit 101, a radar unit 201, and a display processing unit 202. The automatic tuning unit 101 is an example of an automatic tuning device. The magnetron radar 301 is, for example, mounted on a ship.

The magnetron radar 301 performs a detection process of detecting the presence or absence of a target in a detection target area, which is a region to be monitored, and a distance between the magnetron radar 301 and the target. More specifically, in the detection process, the magnetron radar 301 transmits a transmission wave to the detection target area and receives a reception wave including a reflection wave from the detection target area. Then, based on the reception wave, the magnetron radar 301 performs a process of displaying an echo image on the display processing unit 202. The echo image indicates the presence or absence of the target in the detection target area and the distance between the magnetron radar 301 and the target.

For example, in the magnetron radar 301, it is possible to change the setting of the detection range that indicates the size of the detection target area. The magnetron radar 301 performs a process of displaying on the display processing unit 202 the echo image for the detection target area corresponding to the detection range set by the user.

The radar unit 201 includes a transmission control unit 21, a transmission unit 22, a circulator 23, an antenna 24, a reception unit 25, a mixer 26, a local oscillator 27, band pass filters (BPFs) 28A, 28B, a signal processing unit 29, and a generation unit 30.

The transmission control unit 21 outputs a pulse-like transmission trigger to the transmission unit 22. More specifically, the transmission control unit 21 receives the setting of the detection range from the user and outputs the transmission trigger with a pulse width PW corresponding to the received detection range to the transmission unit 22.

The transmission unit 22 generates a transmission wave of a radio frequency (RF) band based on the transmission trigger received from the transmission control unit 21, and outputs the generated transmission wave via the circulator 23 and the antenna 24. A magnetron is used for generating the transmission wave in the transmission unit 22. The transmission unit 22 generates the transmission wave with a frequency unique to the magnetron. As an example, the transmission unit 22 generates, as the transmission wave, a sine wave of 9410 MHz during a period corresponding to the pulse width PW of the transmission trigger received from the transmission control unit 21. The transmission unit 22 may also be configured to generate a sine wave of 3050 MHz, which is in an S-band, as the transmission wave. Hereinafter, the frequency of the transmission wave output by the transmission unit 22 is also referred to as a transmission frequency ft.

The reception unit 25 receives, via the antenna 24 and the circulator 23, a signal of the RF band including a reflection wave that is a transmission wave transmitted from the antenna 24 and reflected by the target, etc. The reception unit 25 outputs the received signal, which is the reception wave, to the mixer 26.

The automatic tuning unit 101 outputs an analog tuning control voltage Vcont to the local oscillator 27. The tuning control voltage Vcont is provided for adjusting the frequency of a local oscillator (LO) signal to be provided to the mixer 26. The LO signal is an example of a carrier signal.

The local oscillator 27 receives the tuning control voltage Vcont from the automatic tuning unit 101 and outputs an LO signal with a frequency corresponding to the level of the received tuning control voltage Vcont to the mixer 26. For example, the local oscillator 27 outputs an LO signal of 9470 MHz to the mixer 26. For example, in the case where the transmission unit 22 generates a sine wave of 3050 MHz as the transmission wave, the local oscillator 27 outputs an LO signal of 3110 MHz to the mixer 26. The frequency of the LO signal output by the local oscillator 27 is not limited to 3050 MHz or 9470 MHz, but can be any frequency corresponding to the frequency of the transmission wave generated by the transmission unit 22.

The mixer 26 down-converts the reception wave received from the reception unit 25. More specifically, the mixer 26 converts the reception wave of 9410 MHz received from the reception unit 25 into an intermediate frequency (IF) signal of 60 MHz by down-converting the reception wave using the LO signal of 9470 MHz received from the local oscillator 27, and outputs the converted IF signal to the BPFs 28A, 28B. The frequency of the IF signal output by the mixer 26 is not limited to 60 MHz, but can be any frequency corresponding to the frequency of the reception wave and the frequency of the LO signal.

The BPF 28A attenuates, among the frequency components of the IF signal received from the mixer 26, a component outside a particular pass band. A center frequency Fc1 of the pass band of the BPF 28A is, for example, 60 MHz. The center frequency Fc1 is not limited to 60 MHz, but can be any frequency corresponding to the IF signal output by the mixer 26.

The BPF 28B attenuates, among the frequency components of the IF signal received from the mixer 26, a component outside a particular pass band. For example, a center frequency Fc2 of the pass band of the BPF 28B is 60 MHz, and the pass band of the BPF 28B is the same as that of the BPF 28A. The bandwidth of the BPF 28B and the bandwidth of the BPF 28A may also be different from each other. The center frequency Fc2 is not limited to 60 MHz, but can be any frequency corresponding to the IF signal output by the mixer 26.

The signal processing unit 29 amplifies the signal that has passed through the BPF 28A, converts the amplified signal into a digital signal by sampling at a particular sampling frequency, and generates echo data based on the converted digital signal. The signal processing unit 29 outputs the generated echo data to the display processing unit 202.

The display processing unit 202 performs a process of displaying an echo image of the detection target area on a display device based on the echo data received from the radar unit 201.

The generation unit 30 generates a tuning indication voltage Vind indicating the intensity of the frequency component of 60 MHz in the IF signal output from the mixer 26, based on the signal that has passed through the BPF 28B. The generation unit 30 may also be configured to generate the tuning indication voltage Vind indicating the intensity of a frequency component other than 60 MHz.

FIG. 2 is a diagram illustrating a configuration of the generation unit in the magnetron radar according to an embodiment of the present invention. Referring to FIG. 2, the generation unit 30 includes a limiter circuit 31, a BPF 32, a wave detection circuit 33, and a smoothing circuit 34.

In the case where the level of the analog signal that has passed through the BPF 28B is equal to or lower than a particular value, the limiter circuit 31 outputs the analog signal from the BPF 28B to the BPF 32 without modification. On the other hand, in the case where the level of the analog signal that has passed through the BPF 28B is greater than the particular value, the limiter circuit 31 clips the analog signal from the BPF 28B so that the level of the analog signal becomes equal to or lower than the particular value, and then outputs the lowered analog signal to the BPF 32.

The BPF 32 attenuates, among the frequency components of the signal received from the limiter circuit 31, a component outside a particular pass band. For example, a center frequency Fc3 of the pass band of the BPF 32 is 60 MHz, and the pass band of the BPF 32 is the same as the pass band of the BPFs 28A and 28B. The bandwidth of BPF 32 and the bandwidths of the BPFs 28A, 28B may also be different from one another. The center frequency Fc3 is not limited to 60 MHz, but can be any frequency corresponding to the IF signal output by the mixer 26.

The wave detection circuit 33 performs envelope detection of the analog signal that has passed through the BPF 32, and outputs to the smoothing circuit 34 an envelope signal indicating the envelope of the analog signal from the BPF 32.

The smoothing circuit 34 generates the analog tuning indication voltage Vind by smoothing the envelope signal received from the wave detection circuit 33, and outputs the tuning indication voltage Vind to the automatic tuning unit 101.

Referring to FIG. 1 again, the automatic tuning unit 101 performs a tuning process of adjusting the level of the tuning control voltage Vcont output to the local oscillator 27, based on the tuning indication voltage Vind received from the generation unit 30.

More specifically, the magnetron radar 301 exerts the best performance when the frequency of the IF signal output from the mixer 26 coincides with the center frequency Fc1 of the pass band of the BPF 28A, and can, for example, detect the target in the detection target area with high sensitivity.

In the tuning process, the automatic tuning unit 101 determines the level of the tuning control voltage Vcont at which the intensity of the component at the center frequency Fc1 in the IF signal output from the mixer 26 becomes maximum, based on the tuning indication voltage Vind received from the generation unit 30. For example, the level of the tuning control voltage Vcont is determined to be a value in a range from 1 volt to 9 volts. The level of the tuning control voltage Vcont is not limited to a value in the range from 1 volt to 9 volts, but determined to be a value in any arbitrary range.

### (Initial tuning setting)

As mentioned above, a magnetron is used for generating the transmission wave in the transmission unit 22. The transmission frequency ft of the transmission wave output by the transmission unit 22 has variations, for example, in a range of 9380 MHz to 9440 MHz, due to the influence of individual differences among magnetrons.

The automatic tuning unit 101 performs an initial tuning setting as a tuning process for compensating for the variations in the transmission frequency ft due to the individual differences among magnetrons during an initial setting period T1 including a timing when the magnetron radar 301 is mounted on a ship. Specifically, after mounting the magnetron radar 301 onto the ship, the seller of the magnetron radar 301 performs an operation for executing the initial tuning setting.

The automatic tuning unit 101 receives an operation from the seller of the magnetron radar 301 and performs the initial tuning setting during the initial setting period T1 . The initial setting period T1 is an example of a first period. The automatic tuning unit 101 may also be configured to receive an operation from a person other than the seller of the magnetron radar 301 and perform the initial tuning setting.

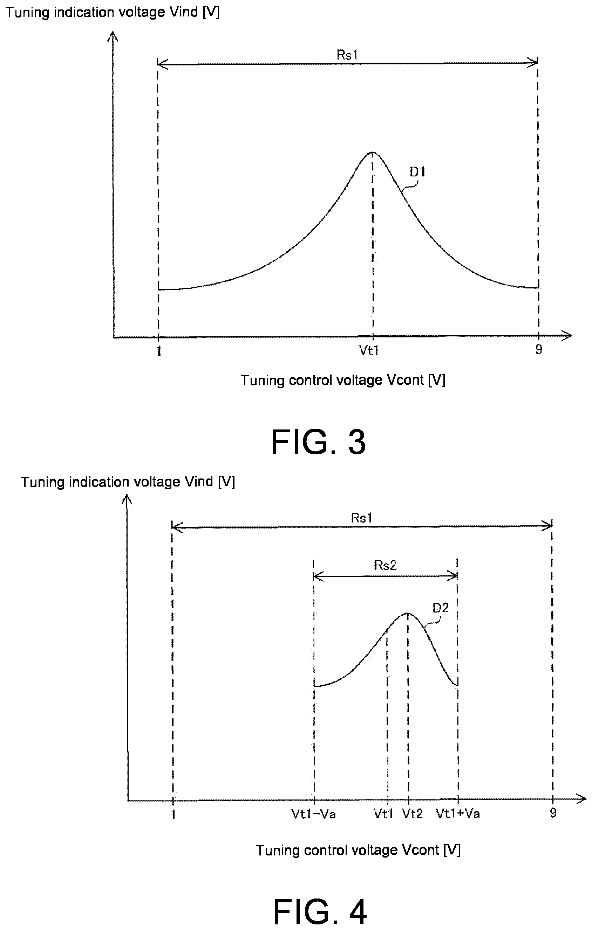

FIG. 3 is a diagram illustrating an example of tuning property data generated by the automatic tuning device according to an embodiment of the present invention. In FIG. 3, the horizontal axis indicates the tuning control voltage Vcont [V], and the vertical axis indicates the tuning indication voltage Vind [V].

Referring to FIG. 3, for example, in the initial tuning setting, the automatic tuning unit 101 generates tuning property data D1 showing a correspondence relationship between the tuning control voltage Vcont in a scanning range Rs1 and the tuning indication voltage Vind received from the generation unit 30. The data are generated by scanning the level of the tuning control voltage Vcont output to the local oscillator 27 from a lower limit level of 1 volt to a upper limit level of 9 volts in the scanning range Rs1.

The automatic tuning unit 101 detects a tuning point Vt1, which is the level of the tuning control voltage Vcont at which the tuning indication voltage Vind becomes maximum, based on the scanning result of the level of the tuning control voltage Vcont in the scanning range Rs1 during the initial setting period T1. More specifically, the automatic tuning unit 101 detects the tuning point Vt1 based on the tuning property data D1 that are generated. The scanning range Rs1 is an example of a second range. The tuning point Vt1 is an example of a first level.

For example, the automatic tuning unit 101 detects the tuning point Vt1 for each pulse width PW of the transmission wave that can be output by the transmission unit 22. More specifically, the automatic tuning unit 101 outputs pulse information indicating the pulse width PW to the transmission control unit 21.

The transmission control unit 21 receives the pulse information from the automatic tuning unit 101 and changes the pulse width PW of the transmission trigger output to the transmission unit 22 to the pulse width PW indicated by the received pulse information.

The automatic tuning unit 101 detects the tuning point Vt1 when the transmission wave with the changed pulse width PW is output from the transmission unit 22. The automatic tuning unit 101 detects the tuning point Vt1 for each pulse width PW by switching the pulse width PW indicated by the pulse information addressed to the transmission control unit 21, and generates initial tuning information showing the correspondence relationship between the pulse width PW and the tuning point Vt1.

The automatic tuning unit 101 stores the generated initial tuning information in a nonvolatile memory (not shown) and completes the initial tuning setting. The automatic tuning unit 101 determines the level of the tuning control voltage Vcont output to the local oscillator 27 based on the initial tuning information generated during the initial tuning setting, such as after the start of the detection process.

### (Transmission start search)

Here, the frequency of the transmission wave generated by using the magnetron has temperature dependence. Therefore, in the case where the temperature at the time of performing the detection process is different from the temperature during at the time of performing the initial tuning setting, the transmission frequency ft of the transmission wave output by the transmission unit 22 in the detection process may be different from the transmission frequency ft of the transmission wave output by the transmission unit 22 in the initial tuning setting.

Therefore, the automatic tuning unit 101 performs a transmission start search as a tuning process for compensating for the variation of the transmission frequency ft due to the temperature dependence of the magnetron during a detection setting period T2 that includes a timing of starting the detection process. Specifically, when the detection process is started by the magnetron radar 301, the user of the magnetron radar 301 performs an operation to execute the transmission start search.

The automatic tuning unit 101 receives the operation from the user and performs the transmission start search during the detection setting period T2. The detection setting period T2 is an example of a second period. The detection setting period T2 is a period different from the initial setting period T1, and is, for example, a period after the initial setting period T1. In the transmission start search, the automatic tuning unit 101 scans the level of the tuning control voltage Vcont output to the local oscillator 27 within a scanning range Rs2 of a particular size using the tuning point Vt1 as reference.

FIG. 4 is a diagram illustrating an example of tuning property data generated by the automatic tuning device according to an embodiment of the present invention. In FIG. 4, the horizontal axis indicates the tuning control voltage Vcont [V], and the vertical axis indicates the tuning indication voltage Vind [V].

Referring to FIG. 4, for example, in the transmission start search, the automatic tuning unit 101 generates tuning property data D2 showing the correspondence relationship between the tuning control voltage Vcont and the tuning indication voltage Vind in the scanning range Rs2 by scanning the level of the tuning control voltage Vcont output to the local oscillator 27 from (Vt1-Va) volts to (Vt1+Va) volts in the scanning range Rs2. Based on the generated tuning property data D2, the automatic tuning unit 101 detects a tuning point Vt2, which is the tuning control voltage Vcont when the tuning indication voltage Vind is at maximum.

After the start of the detection process, the automatic tuning unit 101 determines the level of the tuning control voltage Vcont output to the local oscillator 27 based on the tuning point Vt2 detected in the transmission start search.

For example, after the start of the detection process, the automatic tuning unit 101 executes tracking tuning periodically or irregularly as a tuning process. Specifically, in the tracking tuning, the automatic tuning unit 101 fine-tunes the level of the tuning control voltage Vcont output to the local oscillator 27 based on the tuning point Vt2 detected in the transmission start search by performing feedback control, so that the tuning indication voltage Vind received from the generation unit 30 has a larger value.

### <Issues>

However, in the case where the temperature at the time of performing the transmission start search has significantly transitioned from the temperature at the time of performing the initial tuning setting, it may not be possible to correctly detect the tuning point Vt2 in the transmission start search.

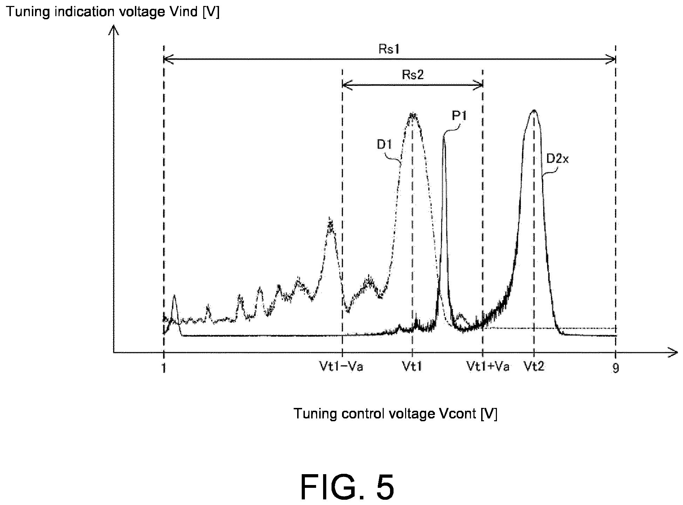

FIG. 5 is a diagram illustrating an example of tuning property data generated by the automatic tuning device according to an embodiment of the present invention. In FIG. 5, the horizontal axis indicates the tuning control voltage Vcont [V], and the vertical axis indicates the tuning indication voltage Vind [V]. The dashed line in FIG. 5 shows the tuning property data D1 generated by the automatic tuning unit 101 in the initial tuning setting. The solid line in FIG. 5 shows tuning property data D2x indicating the correspondence relationship between the tuning control voltage Vcont and the tuning indication voltage Vind in the scanning range Rs1 at the timing of performing the transmission start search. In the example shown in FIG. 5, it is set that the temperature at the time of performing the initial tuning setting is 25°C, and the temperature at the time of performing the transmission start search is -30°C.

Referring to FIG. 5, in the case where the difference between the temperature at the time of performing the transmission start search and the temperature at the time of performing the initial tuning setting is equal to or more than a particular value, the tuning point Vt2 may fall outside the scanning range Rs2. As mentioned above, in the transmission start search, the tuning property data D2 showing the correspondence relationship between the tuning control voltage Vcont and the tuning indication voltage Vind in the scanning range Rs2 is generated. Therefore, in the case where the tuning point Vt2 falls outside the scanning range Rs2, the tuning point Vt2 cannot be detected based on the tuning property data D2.

Furthermore, in the transmission start search, in the case where the value of the tuning control voltage Vcont corresponding to a peak P1 based on a harmonic component of the transmission wave falls within the scanning range Rs2, the tuning control voltage Vcont corresponding to the peak P1 may be erroneously detected as the tuning point Vt2. In this case, in the detection process, the frequency of the IF signal output from the mixer 26 significantly deviates from the center frequency Fc1 of the pass band of the BPF 28A, so the detection sensitivity of the target in the detection target area decreases.

In addition, in the case where the temperature at the time when the setting of the detection range is changed according to an operation of the user after the detection process starts significantly deviates from the temperature at the time of performing the initial tuning setting, the tuning control voltage Vcont at which the tuning indication voltage Vind becomes maximum significantly differs from the tuning point Vt1 corresponding to the pulse width PW indicated by the initial tuning information. Therefore, with fine-tuning of the tuning control voltage Vcont in the tracking tuning, it is difficult to bring the frequency of the IF signal output from the mixer 26 close to the center frequency Fc1 of the pass band of the BPF 28A.

After the start of the detection process, instead of tracking tuning, it may be possible to bring the frequency of the IF signal output from the mixer 26 close to the center frequency Fc1 by performing FFT tuning for adjusting the level of the tuning control voltage Vcont output to the local oscillator 27 based on the frequency spectrum obtained by performing Fourier transform on the IF signal output from the mixer 26. However, in the case where the pulse width PW of the transmission wave is less than a particular value, it becomes difficult to perform FFT tuning because a sufficient number of samples of the IF signal cannot be obtained.

Therefore, the automatic tuning unit 101 according to the embodiment of the present invention resolves the issue with the following configuration.

### <Automatic tuning device>

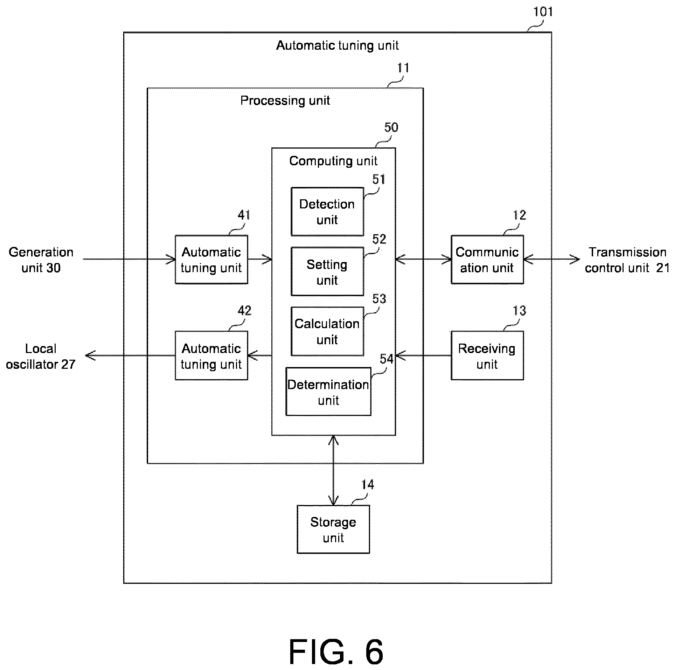

FIG. 6 is a diagram illustrating a configuration of the automatic tuning device according to an embodiment of the present invention. Referring to FIG. 6, the automatic tuning unit 101 includes a processing unit 11, a communication unit 12, a receiving unit 13, and a storage unit 14. The processing unit 11 includes an acquisition unit 41, an output unit 42, and a computing unit 50. The computing unit 50 has a detection unit 51, a setting unit 52, a calculation unit 53, and a determination unit 54. The acquisition unit 41 is, for example, an AD conversion unit. The output unit 42 is, for example, a DA conversion unit. The acquisition unit 41 and the output unit 42 may be provided outside the processing unit 11. Some or all of the processing unit 11, the communication unit 12, and the receiving unit 13 are realized by, for example, a processing circuit (circuitry) including one or multiple processors. The storage unit 14 is, for example, a nonvolatile memory included in the processing circuit.

The communication unit 12 communicates with the transmission control unit 21 in the radar unit 201.

The acquisition unit 41 acquires the tuning indication voltage Vind indicating the intensity of the frequency component of 60MHz in the output signal of the mixer 26. More specifically, the acquisition unit 41 generates a digital signal indicating the level of the tuning indication voltage Vind by performing digital conversion on the tuning indication voltage Vind received from the generation unit 30 in the radar unit 201, and outputs the digital signal to the computing unit 50.

The computing unit 50 determines the level of the tuning control voltage Vcont to be output to the local oscillator 27 based on the level indicated by the digital signal received from the acquisition unit 41. The computing unit 50 outputs a digital signal indicating the determined level to the output unit 42.

The output unit 42 outputs the tuning control voltage Vcont for adjusting the frequency of the LO signal applied to the mixer 26. More specifically, the output unit 42 generates the tuning control voltage Vcont by performing analog conversion on the digital signal received from the computing unit 50, and outputs the tuning control voltage Vcont to the local oscillator 27 in the radar unit 201.

### (Initial tuning setting)

The receiving unit 13, for example, receives an operation for executing the initial tuning setting from the seller of the magnetron radar 301, and outputs operation information C1 to the processing unit 11. The receiving unit 13 may also be configured to receive an operation from a person other than the seller of the magnetron radar 301 and output the operation information C1 to the processing unit 11.

The computing unit 50 in the processing unit 11 receives the operation information C1 from the receiving unit 13 and performs the initial tuning setting during the initial setting period T1. More specifically, the computing unit 50 generates pulse information indicating the pulse width PW and outputs an output instruction including the generated pulse information to the transmission control unit 21 in the radar unit 201 via the communication unit 12.

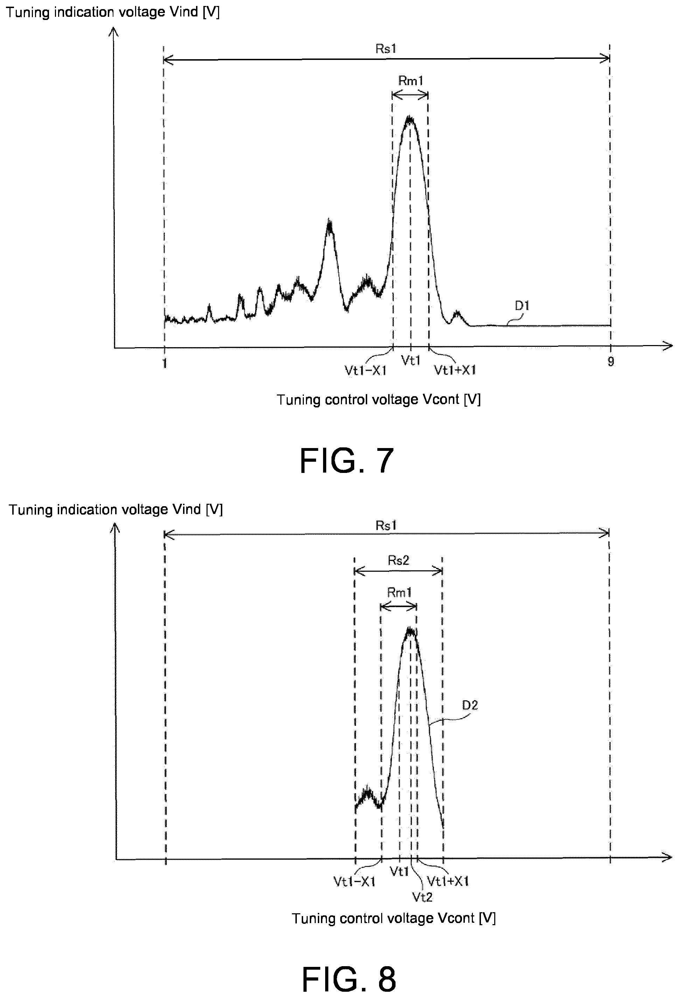

FIG. 7 is a diagram illustrating an example of tuning property data generated by the automatic tuning device according to an embodiment of the present invention. In FIG. 7, the horizontal axis indicates the tuning control voltage Vcont [V], and the vertical axis indicates the tuning indication voltage Vind [V]. FIG. 7 shows the tuning property data D1.

Referring to FIG. 7, the detection unit 51 in the computing unit 50 detects the tuning point Vt1 based on the scanning result of the scanning range Rs1 during the initial setting period T1. Specifically, the detection unit 51 detects the tuning point Vt1 based on the scanning result of the level of the tuning control voltage Vcont in the scanning range Rs1 during the initial setting period T1. More specifically, the detection unit 51 generates the tuning property data D1 based on the level indicated by the digital signal received from the acquisition unit 41 when scanning the level indicated by the digital signal output to the output unit 42 in the scanning range Rs1, and detects the tuning point Vt1 based on the generated tuning property data D1.

The detection unit 51 detects the tuning point Vt1 for each pulse width PW by switching the pulse width PW indicated by the pulse information addressed to the transmission control unit 21, and generates the initial tuning information showing the correspondence relationship between the pulse width PW and the tuning point Vt1. The detection unit 51 stores the generated initial tuning information in the storage unit 14.

Furthermore, the setting unit 52 in the computing unit 50 sets a threshold Th1 based on a calculation range Rm1 that includes therein the tuning point Vt1 during the initial setting period T1. For example, the setting unit 52 sets the threshold Th1 based on the tuning indication voltage Vind during the initial setting period T1. More specifically, the setting unit 52 sets the threshold Th1 based on multiple tuning indication voltages Vind respectively corresponding to the levels of multiple tuning control voltage Vcont in the calculation range Rm1 that includes the tuning point Vt1 during the initial setting period T1. The calculation range Rm1 is an example of a first range. The threshold Th1 is an example of a reference value. The calculation range Rm1 is narrower than the scanning range Rs1.

For example, the setting unit 52 sets the threshold Th1 based on the accumulated value of the tuning control voltage Vcont in the calculation range Rm1. Specifically, the setting unit 52 sets the threshold Th1 based on an accumulated value SV1 of multiple tuning indication voltages Vind respectively corresponding to the levels of multiple tuning control voltages Vcont in the calculation range Rm1 during the initial setting period T1. For example, the setting unit 52 sets, as the threshold Th1, a value obtained by multiplying the accumulated value SV1 by a particular value equal to or more than zero and less than 1.

More specifically, the setting unit 52 calculates the accumulated value SV1 of multiple tuning indication voltages Vind respectively corresponding to multiple tuning control voltages Vcont at respective intervals N1 in the calculation range Rm1 from (Vt1-X1) volts to (Vt1+X1) volts. The setting unit 52 calculates as the threshold Th1 a value obtained by multiplying the calculated accumulated value SV1 by, for example, 0.6.

The setting unit 52 calculates the threshold Th1 for each pulse width PW and generates threshold information indicating the correspondence relationship between the pulse width PW and the threshold Th1. The setting unit 52 stores the generated threshold information in the storage unit 14.

### (Accumulated search when transmission starts)

The receiving unit 13, for example, receives an operation for executing the transmission start search from the user of the magnetron radar 301, and outputs received operation information C2 to the processing unit 11.

The computing unit 50 in the processing unit 11 receives the operation information C2 from the receiving unit 13, and performs an accumulated search instead of the transmission start search during the detection setting period T2.

More specifically, the computing unit 50 refers to the initial tuning information in the storage unit 14 and acquires the tuning point Vt1 corresponding to the pulse width PW of the transmission trigger currently output by the transmission control unit 21. Moreover, the computing unit 50 refers to the threshold information in the storage unit 14 and acquires the threshold Th1 corresponding to the pulse width PW of the transmission trigger currently output by the transmission control unit 21. The computing unit 50 performs the accumulated search by using the acquired tuning point Vt1 and threshold Th1.

FIG. 8 is a diagram illustrating an example of tuning property data generated by the automatic tuning device according to an embodiment of the present invention. In FIG. 8, the horizontal axis indicates the tuning control voltage Vcont [V], and the vertical axis indicates the tuning indication voltage Vind [V]. FIG. 8 shows the tuning property data D2.

Referring to FIG. 8, the calculation unit 53 in the computing unit 50 calculates an index value IV based on the scanning result of the calculation range Rm1 that includes therein the tuning point Vt1 during the detection setting period T2. For example, the calculation unit 53 calculates the index value IV based on the tuning indication voltage Vind of the calculation range Rm1. Specifically, the calculation unit 53 calculates the index value IV based on multiple tuning indication voltages Vind respectively corresponding to the levels of multiple tuning control voltages Vcont in the calculation range Rm1 that includes the tuning point Vt1 during the detection setting period T2.

More specifically, the calculation unit 53 calculates the index value IV based on the accumulated value of the tuning indication voltage Vind. In other words, the calculation unit 53 calculates, as the index value IV, an accumulated value SV2 of multiple tuning indication voltages Vind respectively corresponding to multiple tuning control voltages Vcont at respective intervals N1 in the calculation range Rm1.

The determination unit 54 in the computing unit 50 determines the tuning control voltage Vcont output by the output unit 42 based on the comparison result between the index value IV and the threshold Th1. More specifically, the determination unit 54 determines an output level Vout, which is the level of the tuning control voltage Vcont to be output by the output unit 42, based on the comparison result between the index value IV and the threshold Th1, and the scanning result of the level of the tuning control voltage Vcont during the detection setting period T2.

For example, the determination unit 54 determines the output level Vout based on the scanning result of the level of the tuning control voltage Vcont in the scanning range Rs2, which is a range including the tuning point Vt1 and narrower than the scanning range Rs1, defined based on the tuning point Vt1.

For example, the calculation unit 53 calculates multiple index values IV by scanning with a width same as the calculation range Rm1. The determination unit 54 determines the tuning control voltage Vcont corresponding to the scanning position where the index value IV equal to or more than the threshold Th1 is calculated.

More specifically, in the example shown in FIG. 8, the index value IV is assumed to be equal to or more than the threshold Th1. In this case, the determination unit 54 determines the output level Vout based on the scanning result of the level of the tuning control voltage Vcont in the scanning range Rs2 during the detection setting period T2. The scanning range Rs2 is an example of a third range. In other words, in the case where the index value IV is equal to or more than the threshold Th1, the determination unit 54 generates the tuning property data D2 by performing the transmission start search, and detects the tuning point Vt2 based on the generated tuning property data D2. The determination unit 54 determines the detected tuning point Vt2 as the output level Vout.

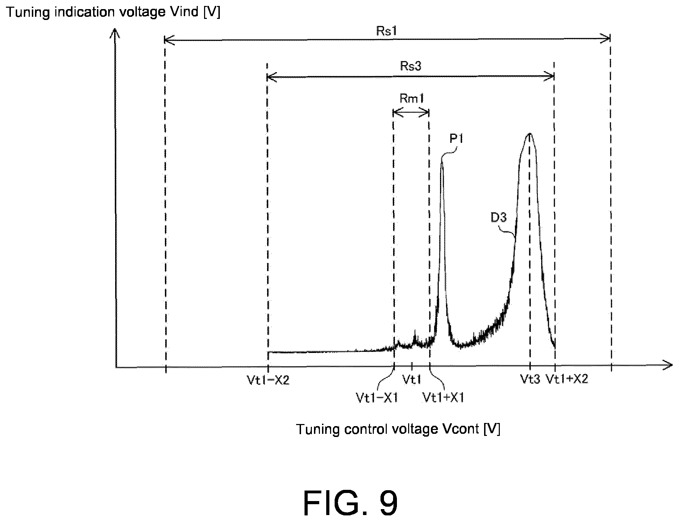

FIG. 9 is a diagram illustrating another example of tuning property data generated by the automatic tuning unit according to an embodiment of the present invention. In FIG. 9, the horizontal axis indicates the tuning control voltage Vcont [V], and the vertical axis indicates the tuning indication voltage Vind [V]. FIG. 9 shows tuning property data D3.

Referring to FIG. 9, the calculation unit 53 calculates, as the index value IV, the accumulated value SV2 of multiple tuning indication voltages Vind respectively corresponding to multiple tuning control voltages Vcont at respective intervals N1 in the calculation range Rm1.

For example, the determination unit 54 determines the output level Vout based on the scanning result of the level of the tuning control voltage Vcont in the scanning range Rs3, which is a range including the tuning point Vt1 and narrower than the scanning range Rs1, defined based on the tuning point Vt1.

More specifically, in the example shown in FIG. 9, the index value IV is assumed to be less than the threshold Th1. In this case, the determination unit 54 determines the output level Vout based on the scanning result of the level of the tuning control voltage Vcont in the scanning range Rs3 during the detection setting period T2. The scanning range Rs3 is a range wider than the scanning range Rs2. The scanning range Rs3 is an example of a fourth range.

In other words, in the case where the index value IV is less than the threshold Th1, the determination unit 54 performs an extended transmission start search instead of the transmission start search. In the extended transmission start search, the determination unit 54 generates the tuning property data D3 showing the correspondence relationship between the tuning control voltage Vcont and the tuning indication voltage Vind in the scanning range Rs3 by scanning the level of the tuning control voltage Vcont output to the local oscillator 27 at intervals N2 from (Vt1-X2) volts to (Vt1+X2) volts in the scanning range Rs3. The interval N2 may be the same as or different from the interval N1.

Based on the generated tuning property data D3, the determination unit 54 detects a tuning point Vt3, which is the tuning control voltage Vcont when the tuning indication voltage Vind is at maximum. The determination unit 54 determines the detected tuning point Vt3 as the output level Vout.

### (Accumulated search during pulse width change)

In the case where an operation for changing change the setting of the detection range is received from the user of the magnetron radar 301 after the start of the detection process, the receiving unit 13 in the automatic tuning unit 101 outputs the received operation information C3 to the processing unit 11.

The computing unit 50 in the processing unit 11 receives the operation information C3 from the receiving unit 13 and outputs the pulse information indicating the pulse width PW corresponding to the detection range after the setting change to the transmission control unit 21. Additionally, the computing unit 50 receives the operation information C3 from the receiving unit 13 and, during the detection period T3 after the start of the detection process, performs an accumulated search. The detection period T3 is, for example, a period after the initial setting period T1 and the detection setting period T2.

More specifically, the computing unit 50 refers to the initial tuning information in the storage unit 14 and acquires the tuning point Vt1 corresponding to the pulse width PW after change. Additionally, the computing unit 50 refers to the threshold information in the storage unit 14 and acquires the threshold Th1 corresponding to the pulse width PW after change. The computing unit 50 performs the accumulated search by using the acquired tuning point Vt1 and threshold Th1.

Referring again to FIG. 8 and FIG. 9, the calculation unit 53 calculates the index value IV based on multiple tuning indication voltages Vind respectively corresponding to the levels of multiple tuning control voltages Vcont in the calculation range Rm1 during the detection period T3.

As shown in FIG. 8, in the case where the index value IV is equal to or more than the threshold Th1, the computing unit 50 starts tracking tuning or FFT tuning by using the tuning point Vt1 corresponding to the pulse width PW after change as a reference.

On the other hand, as shown in FIG. 9, in the case where the index value IV is less than the threshold Th1, the computing unit 50 determines the output level Vout based on the scanning result of the level of the tuning control voltage Vcont in the scanning range Rs3 during the detection period T3. Specifically, in the case where the index value IV is less than the threshold Th1, the determination unit 54 in the computing unit 50 generates the tuning property data D3 by performing the extended transmission start search, and detects the tuning point Vt3 based on the generated tuning property data D3. The determination unit 54 determines the detected tuning point Vt3 as the output level Vout.

### [Operation flow]

The magnetron radar according to the embodiment of the present invention includes a computer having a memory, and the processor such as a CPU in the computer reads and executes, from the memory, a program that includes some or all of the respective steps in the following flowchart and sequence. The program of the device can be disposed externally. The program of the device can be distributed in a state stored on a recording medium or via a communication line.

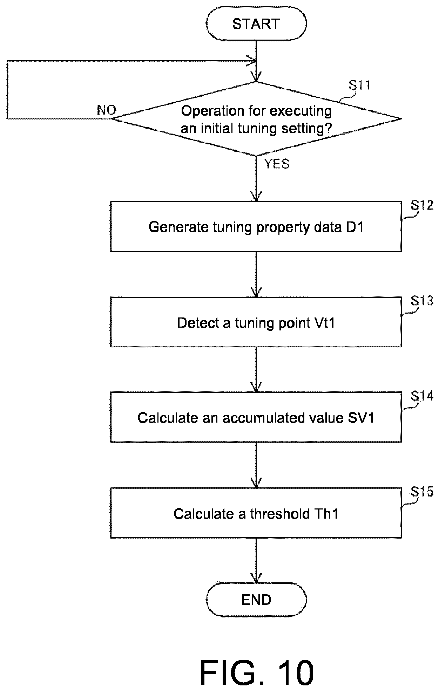

FIG. 10 is a flowchart illustrating an example of an operation of the magnetron radar according to an embodiment of the present invention when performing initial tuning setting.

Referring to FIG. 10, firstly, the automatic tuning unit 101 in the magnetron radar 301 waits to receive an operation for executing the initial tuning setting (NO in Step S11), and, when receiving the operation for executing the initial tuning setting (YES in Step S11), generates the tuning property data D1 based on the tuning indication voltage Vind received from the generation unit 30 when scanning the tuning control voltage Vcont output to the local oscillator 27 in the scanning range Rs1 (Step S12).

Next, the automatic tuning unit 101 detects the tuning point Vt1 based on the generated tuning property data D1 (Step S13).

Next, the automatic tuning unit 101 calculates the accumulated value SV1 of multiple tuning indication voltages Vind respectively corresponding to multiple tuning control voltages Vcont in the calculation range Rm1 (Step S14).

Next, the automatic tuning unit 101 calculates, as the threshold Th1, a value obtained by multiplying the calculated accumulated value SV1 by, for example, 0.6, and stores the calculated threshold Th1 in the storage unit 14 (Step S15).

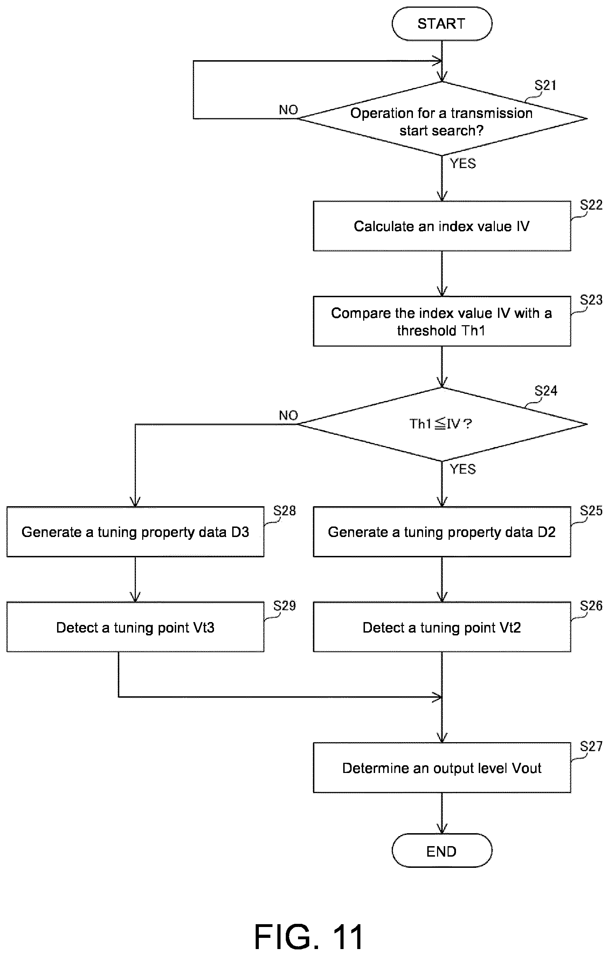

FIG. 11 is a flowchart illustrating an example of an operation of the magnetron radar according to an embodiment of the present invention when performing cumulative search.

Referring to FIG. 11, firstly, the automatic tuning unit 101 in the magnetron radar 301 waits to receive the operation for executing the transmission start search (NO in Step S21), and, when receiving an operation for executing the transmission start search from, for example, the user of the magnetron radar 301 (YES in Step S21), calculates, as the index value IV, the accumulated value SV2 of multiple tuning indication voltages Vind respectively corresponding to multiple tuning control voltages Vcont in the calculation range Rm1 (Step S22).

Next, the automatic tuning unit 101 compares the calculated index value IV with the threshold Th1 (Step S23).

Next, in the case where the index value IV is equal to or more than the threshold Th1 (YES in Step S24), the automatic tuning unit 101 generates the tuning property data D2 by performing the transmission start search (Step S25).

Next, the automatic tuning unit 101 detects the tuning point Vt2 based on the generated tuning property data D2 (Step S26).

Next, the automatic tuning unit 101 determines the detected tuning point Vt2 as the output level Vout, which is the level of the tuning control voltage Vcont to be output to the local oscillator 27 (Step S27).

On the other hand, in the case where the index value IV is less than the threshold Th1 (NO in Step S24), the automatic tuning unit 101 performs the extended transmission start search. More specifically, the automatic tuning unit 101 generates the tuning property data D3 showing the correspondence relationship between the tuning control voltage Vcont and the tuning indication voltage Vind in the scanning range Rs3 by scanning the level of the tuning control voltage Vcont output to the local oscillator 27 in the scanning range Rs3 (Step S28).

Next, the automatic tuning unit 101 detects the tuning point Vt3 based on the generated tuning property data D3 (Step S29).

Next, the automatic tuning unit 101 determines the detected tuning point Vt3 as the output level Vout, which is the level of the tuning control voltage Vcont to be output to the local oscillator 27 (Step S27).

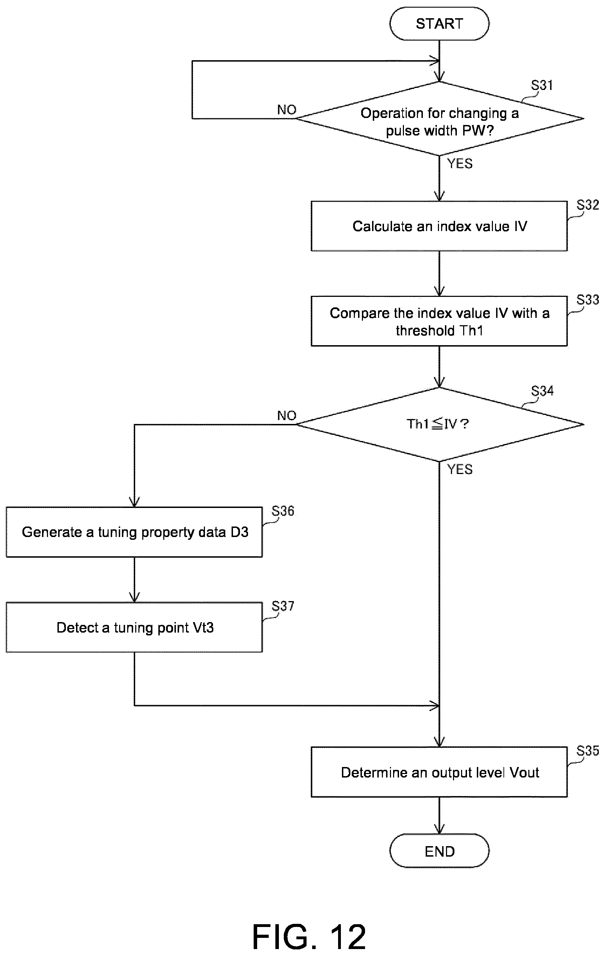

FIG. 12 is a flowchart illustrating another example of an operation of the magnetron radar according to an embodiment of the present invention when performing cumulative search.

Referring to FIG. 12, firstly, the automatic tuning unit 101 in the magnetron radar 301 waits to receive the operation for changing the pulse width PW after the start of the detection process (NO in Step S31), and receives the operation for changing the pulse width PW, for example, from the user of the magnetron radar 301 (YES in Step S31).

Next, the automatic tuning unit 101 in the magnetron radar 301 calculates, as the index value IV, the accumulated value SV2 of multiple tuning indication voltages Vind respectively corresponding to multiple tuning control voltages Vcont in the calculation range Rm1 (Step S32).

Next, the automatic tuning unit 101 compares the calculated index value IV with the threshold Th1 (Step S33).

Next, in the case where the index value IV is equal to or more than the threshold Th1 (YES in Step S34), the automatic tuning unit 101 determines the tuning point Vt1 as the output level Vout and starts tracking tuning or FFT tuning (Step S35).

On the other hand, in the case where the index value IV is less than the threshold Th1 (NO in Step S34), the automatic tuning unit 101 performs the extended transmission start search. More specifically, the automatic tuning unit 101 generates the tuning property data D3 showing the correspondence relationship between the tuning control voltage Vcont and the tuning indication voltage Vind in the scanning range Rs3 by scanning the level of the tuning control voltage Vcont output to the local oscillator 27 in the scanning range Rs3 (Step S36).

Next, the automatic tuning unit 101 detects the tuning point Vt3 based on the generated tuning property data D3 (Step S37).

Next, the automatic tuning unit 101 determines the detected tuning point Vt3 as the output level Vout (Step S38).

In the magnetron radar 301 according to the embodiment of the present invention, it is configured that the radar unit 201 includes the generation unit 30. However, the present invention is not limited to this configuration. Instead of the radar unit 201, the automatic tuning unit 101 may also include the generation unit 30.

Furthermore, in the magnetron radar 301 according to the embodiment of the present invention, it is configured that the computing unit 50 in the automatic tuning unit 101 sets the threshold Th1 based on the tuning indication voltage Vind in the calculation range Rm1 and calculates the index value IV based on the tuning indication voltage Vind in the calculation range Rm1. However, the present invention is not limited to this configuration. The setting unit 52 may also be configured to set the threshold Th1 based on the tuning indication voltage Vind in the calculation range Rm1, while the calculation unit 53 may also be configured to calculate the index value IV based on the tuning indication voltage Vind in the calculation range Rm2 different from the calculation range Rm1.

Moreover, in the magnetron radar 301 according to the embodiment of the present invention, it is configured that the setting unit 52 in the automatic tuning unit 101 calculates the accumulated value SV1 of multiple tuning indication voltages Vind respectively corresponding to multiple tuning control voltages Vcont in the calculation range Rm1, and calculates, as the threshold Th1, a value obtained by multiplying the calculated accumulated value SV1 by, for example, 0.6. However, the present invention is not limited to this configuration. The setting unit 52 may be configured to calculate, as the threshold Th1, a value obtained by multiplying the accumulated value SV1 by a value other than 0.6.

Additionally, the setting unit 52 may also be configured to calculate other statistical values, etc., instead of the accumulated value SV1.

Furthermore, in the magnetron radar 301 according to the embodiment of the present invention, it is configured that the determination unit 54 in the automatic tuning unit 101 compares the threshold Th1 calculated in the initial tuning setting with the index value IV in the accumulated search. However, the present invention is not limited to this configuration. For example, the determination unit 54 may be configured to calculate a new threshold Th1 by multiplying the index value IV calculated in the accumulated search by a particular coefficient, and update the threshold Th1 in the storage unit 14 to the calculated threshold Th1. In this case, the determination unit 54 compares the updated threshold Th1 with the index value IV in the next accumulated search.

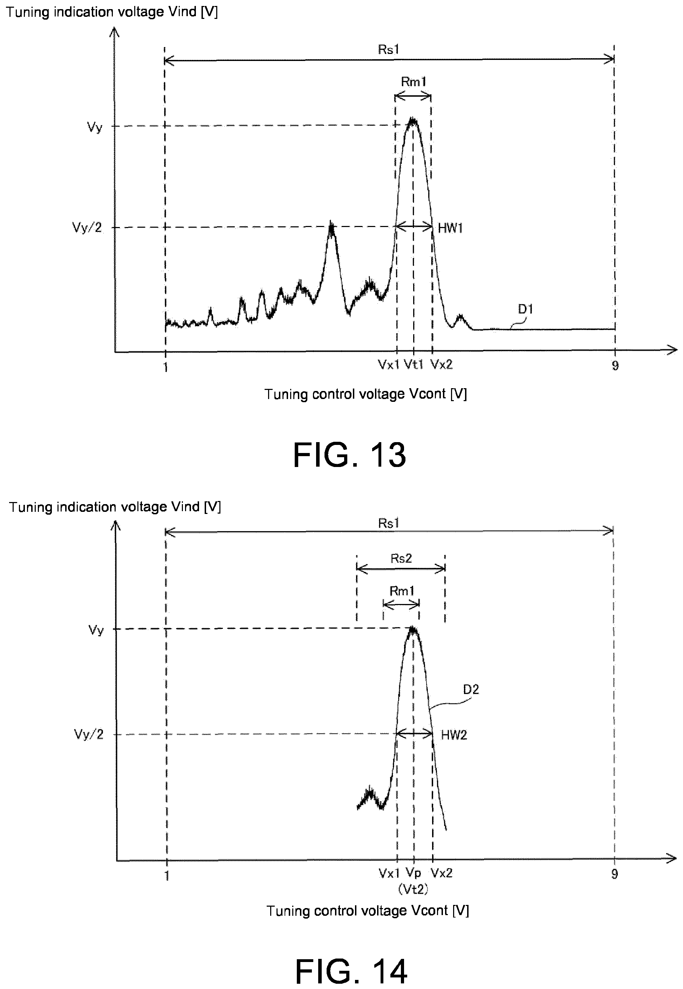

FIG. 13 is a diagram illustrating an example of a method for calculating a threshold by an automatic tuning device according to a modified example of an embodiment of the present invention. In FIG. 13, the horizontal axis indicates the tuning control voltage Vcont [V], and the vertical axis indicates the tuning indication voltage Vind [V]. FIG. 13 shows the tuning property data D1.

Referring to FIG. 13, the calculation range Rm1 is a half-width HW1 of the peak of the maximum of the tuning indication voltage Vind. Specifically, the setting unit 52 calculates the half-width HW1 of the peak region of the tuning indication voltage Vind corresponding to the tuning point Vt1, instead of the accumulated value SV1. More specifically, the setting unit 52 acquires a level Vy of the tuning indication voltage Vind corresponding to the tuning point Vt1 based on the tuning property data D1. The setting unit 52 acquires levels Vx1 and Vx2 of the tuning control voltage Vcont corresponding to 1/2 of the level Vy, and calculates as the half-width HW1 the difference between the acquired levels Vx1 and Vx2. Then, the setting unit 52 calculates, as the threshold Th1, a value obtained by multiplying the calculated half-width HW1 by, for example, 0.6.

FIG. 14 is a diagram illustrating an example of a method for calculating an index value by an automatic tuning device according to a modified example of an embodiment of the present invention. In FIG. 14, the horizontal axis indicates the tuning control voltage Vcont [V], and the vertical axis indicates the tuning indication voltage Vind [V]. FIG. 14 shows the tuning property data D2.

Referring to FIG. 14, the calculation unit 53 calculates as the index value IV the half-width HW1 of the peak present in the calculation range Rm1. Specifically, instead of calculating the accumulated value SV2 as the index value IV, the calculation unit 53 detects a level Vp of the tuning control voltage Vcont when the tuning indication voltage Vind is the maximum in the calculation range Rm1, and calculates as the index value IV a half-width HW2 of the peak region of the tuning indication voltage Vind corresponding to the level Vp. More specifically, the calculation unit 53 acquires the level Vy of the tuning indication voltage Vind corresponding to the level Vp. The calculation unit 53 acquires the levels Vx1 and Vx2 of the tuning control voltage Vcont corresponding to 1/2 of the level Vy, and calculates as the index value IV the half-width HW2, which is the difference between the acquired levels Vx1 and Vx2.

In the case where the index value IV is equal to or more than the threshold Th1, the determination unit 54 generates the tuning property data D2 by performing the transmission start search, and detects the tuning point Vt2 based on the generated tuning property data D2. The determination unit 54 determines the detected tuning point Vt2 as the output level Vout. In the example shown in FIG. 14, the tuning point Vt2 is equal to the level Vp.

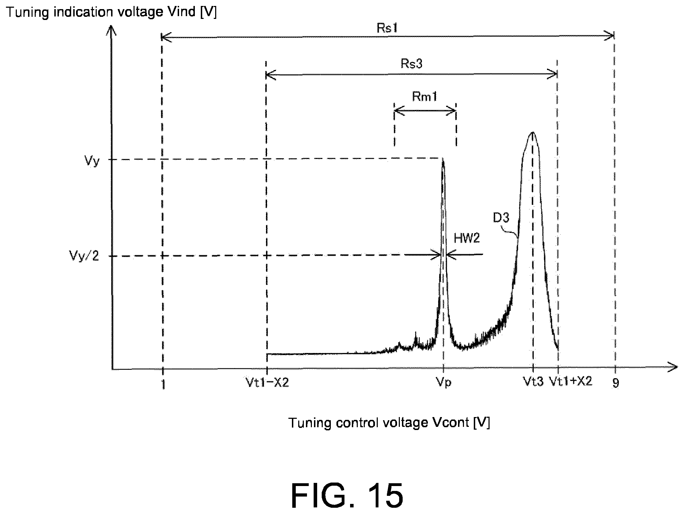

FIG. 15 is a diagram illustrating another example of a method for calculating the index value by the automatic tuning device according to a modified example of an embodiment of the present invention. In FIG. 15, the horizontal axis indicates the tuning control voltage Vcont [V], and the vertical axis indicates the tuning indication voltage Vind [V]. FIG. 15 shows tuning property data D3.

Referring to FIG. 15, the calculation unit 53 detects the level Vp of the tuning control voltage Vcont when the tuning indication voltage Vind is the maximum in the calculation range Rm1, and calculates as the index value IV the half-width HW2 of the peak region of the tuning indication voltage Vind corresponding to the level Vp.

In the case where the index value IV is less than the threshold Th1, the determination unit 54 generates the tuning property data D3 by performing the extended transmission start search, and detects the tuning point Vt3 based on the generated tuning property data D3. The determination unit 54 determines the detected tuning point Vt3 as the output level Vout.

In the tuning process, a technique that enables more suitable control on the frequency of the carrier signal provided to the mixer is desired.

In response to this, in the automatic tuning unit 101 according to the embodiment of the present invention, the output unit 42 outputs the tuning control voltage Vcont for adjusting the frequency of the LO signal provided to the mixer 26. The acquisition unit 41 acquires the tuning indication voltage Vind indicating the intensity of the frequency component of 60MHz in the output signal of the mixer 26. The setting unit 52 sets the threshold Th1 based on multiple tuning indication voltages Vind respectively corresponding to the levels of multiple tuning control voltages Vcont in the calculation range Rm1 including the tuning point Vt1 during the initial setting period T1. The calculation unit 53 calculates the index value IV based on multiple tuning indication voltages Vind respectively corresponding to the levels of multiple tuning control voltage Vcont in the calculation range Rm1 including the tuning point Vt1 during the detection setting period T2. The determination unit 54 determines the output level Vout, which is the level of the tuning control voltage Vcont to be output in the output unit 42, based on the comparison result between the index value IV and the threshold Th1 and the scanning result of the level of the tuning control voltage Vcont during the detection setting period T2.

In this way, with the configuration of determining the output level Vout of the tuning control voltage Vcont based on the comparison result between the index value IV and the threshold Th1, and the scanning result of the level of the tuning control voltage Vcont during the detection setting period T2, it is possible to determine the output level Vout by considering the comparison result between the index value IV based on the tuning indication voltage Vind during the detection setting period T2 and the threshold Th1 based on the tuning indication voltage Vind during the initial setting period T1. Therefore, in the case where the tuning point during the detection setting period T2 transitions from the tuning point during the initial setting period T1 due to the temperature dependence of the magnetron, it is possible to recognize the transition of the tuning point based on the comparison result between the index value IV and the threshold Th1 and determine a more suitable output level Vout for tuning by taking into consideration the transition of the tuning point. Consequently, in the tuning process, it is possible to more suitably control the frequency of the LO signal provided to the mixer 26.

Furthermore, by using the comparison result between the index value IV and the threshold Th1, it is possible to recognize the transition of the tuning point according to the degree of similarity between the peak shape of the tuning indication voltage Vind during the initial setting period T1 and the peak shape of the tuning indication voltage Vind during the detection setting period T2. Additionally, since the width of the peak shape of the tuning indication voltage Vind based on harmonic components is smaller than the width of the peak shape of the tuning indication voltage Vind based on the tuning point, by determining the output level Vout by considering the comparison result between the index value IV and the threshold Th1, it is possible to prevent erroneously detecting, as the tuning point, the tuning control voltage Vcont corresponding to the peak of the tuning indication voltage Vind based on harmonic components.

The embodiments should be considered as exemplary in all aspects and not restrictive. The scope of the present invention is indicated by the claims rather than the above description, and it is intended to include all modifications within the meaning and scope equivalent to the claims.

### [Reference sign list]

11: Processing unit;
12: Communication unit;
13: Receiving unit;
14: Storage unit;
21: Transmission control unit;
22: Transmission unit;
23: Circulator;
24: Antenna;
25: Reception unit;
26: Mixer;
27: Local oscillator;
28A, 28B, 32: BPF;
29: Signal processing unit;
30: Generation unit;
31: Limiter circuit;
33: Wave detection circuit;
34: Smoothing circuit;
41: Acquisition unit;
42: Output unit;
50: Computing unit;
51: Detection unit;
52: Setting unit;
53: Calculation unit;
54: Determination unit;
101: Automatic tuning unit;
201: Radar unit;
202: Display processing unit;
301: Magnetron radar;
D1, D2, D2x, D3: Tuning property data;
Vt1, Vt2, Vt3: Tuning point;
Rs1, Rs2, Rs3: Scanning range;
Rm1: Calculation range;
P1: Peak;
HW1, HW2: Half-width.

## Claims

1. An automatic tuning device mounted on a magnetron radar comprising a mixer that down-converts a reception wave, the automatic tuning device comprising:
an output unit, configured to output a tuning control voltage for adjusting a frequency of a carrier signal provided to the mixer;
an acquisition unit, configured to acquire a tuning indication voltage indicating an intensity of a component of a particular frequency in an output signal of the mixer;
a setting unit, configured to set a reference value based on a particular range comprising therein a first level that is the tuning control voltage corresponding to a maximum of the tuning indication voltage in a first period;
a calculation unit, configured to calculate an index value based on a scanning result of a first range comprising therein the first level in a second period; and
a determination unit, configured to determine the tuning control voltage output by the output unit based on a comparison result between the index value and the reference value.

2. The automatic tuning device as claimed in claim 1, further comprising:
a detection unit, configured to detect the first level based on a scanning result of a second range wider than the first range in the first period.

3. The automatic tuning device as claimed in claim 2, wherein the setting unit is configured to set the reference value based on the tuning indication voltage in the particular range, and
the calculation unit is configured to calculate the index value based on the tuning indication voltage of the first range.

4. The automatic tuning device as claimed in claim 1, wherein the calculation unit is configured to calculate a plurality of the index values by scanning with a width same as the particular range, and
the determination unit is configured to determine the tuning control voltage in correspondence with a scanning position at which the index value is calculated, wherein the index value is equal to or more than the reference value.

5. The automatic tuning device as claimed in any one of claims 1 to 4, wherein the setting unit is configured to set the reference value based on an accumulated value of the tuning indication voltage of the particular range, and
the calculation unit is configured to calculate the index value based on the accumulated value of the tuning indication voltage.

6. The automatic tuning device as claimed in claim 5, wherein the setting unit is configured to set, as the reference value, a value obtained by multiplying the accumulated value by a particular value less than 1.

7. The automatic tuning device as claimed in claim 1, wherein the particular range is a half-width of a peak of a maximum of the tuning indication voltage, and
the calculation unit is configured to calculate, as the index value, a half-width of a peak present in the first range.

8. A magnetron radar, comprising the automatic tuning device as claimed in any one of claims 1 to 4.

9. An automatic tuning method for a magnetron radar comprising a mixer that down-converts a reception wave, the automatic tuning method comprising:
outputting a tuning control voltage for adjusting a frequency of a carrier signal provided to the mixer;
generating a tuning indication voltage indicating an intensity of a component of a particular frequency in an output signal of the mixer;
setting a reference value based on a particular range comprising therein a first level that is the tuning control voltage corresponding to a maximum of the tuning indication voltage in a first period;
calculating an index value based on a scanning result of a first range comprising therein the first level in a second period; and
determining the tuning control voltage output based on a comparison result between the index value and the reference value.

10. An automatic tuning program for a magnetron radar comprising a mixer down-converting a reception wave, the automatic tuning program causing a computer to execute:
a process of outputting a tuning control voltage for adjusting a frequency of a carrier signal provided to the mixer;
a process of generating a tuning indication voltage indicating an intensity of a component of a particular frequency in an output signal of the mixer;
a process of setting a reference value based on a particular range comprising therein a first level that is the tuning control voltage corresponding to a maximum of the tuning indication voltage in a first period;
a process of calculating an index value based on a scanning result of a first range comprising therein the first level in a second period; and
a process of determining the tuning control voltage output based on a comparison result between the index value and the reference value.
